# EUROPÄISCHE PATENTANMELDUNG

(11) **EP 0 963 113 A2**
(43) Veröffentlichungstag der Anmeldung: **08.12.1999**
(21) Anmeldenummer: 99110561.0
(22) Anmeldetag: 01.06.1999
(51) Int. Cl.: H04N 7/01

(54) **Normwandler für Videobilder und Verfahren zum Umwandeln der Norm eines Videosignals**

(30) Priorität: 02.06.1998 DE 19824571
(71) Anmelder: Denz, Peter, 85521 Ottobrunn (DE)
(72) Erfinder: Denz, Peter, 85521 Ottobrunn (DE)
(74) Vertreter: Zinnecker, Armin, Dipl.-Ing.

(57) **Zusammenfassung**

Ein Normwandler für Videobilder dient zum Umwandeln der Video-Norm eines digitalen Videosignals. Er besitzt einen Speicher (1) zum Speichern des digitalen Videosignais, einen Adreß-Generator (2) zum Generieren von Adressen des Speichers (1) und einen Interpolator (3) zum Interpolieren der an den generierten Adressen des Speichers (1) abgespeicherten Daten. Dabei erfolgt die Interpolation in Abhängigkeit von den generierten Speicher-Adressen.

## Beschreibung

Die Erfindung betrifft einen Normwandler für Videobilder. Sie betrifft ferner ein Verfahren zum Umwandeln der Norm eines Videosignals. Die Erfindung betrifft schließlich eine Videokamera, insbesondere für eine Laufbild-Filmkamera, sowie eine Laufbild-Filmkamera.

Für Videobilder sind verschiedene Normen gebräuchlich, beispielsweise die Norm PAL mit 625 Zeilen und die Norm NTSC mir 525 Zeilen. Eine Videokamera ist üblicherweise geeignet, die Videobilder in einer bestimmten Norm aufzunehmen und/oder Videosignale in einer bestimmten Norm abzugeben.

Es ist ferner in der Praxis bekannt, bei Laufbild-Filmkameras eine Ausspiegelung für eine Videokamera vorzusehen. Der Kameramann oder Regisseur kann dann das Bild, das mit der Laufbild-Filmkamera aufgenommen wird, zeitgleich auf einem Videoschirm sehen. Das Videobild kann ferner gespeichert und dann erneut betrachtet werden. Damit ist eine sofortige Überwachung und Korrektur der von der Laufbild-Filmkamera gemachten Aufnahmen möglich, ohne daß das Filmmaterial zunächst teuer und zeitaufwendig entwickelt werden müßte.

Bisher werden für die Videoausspiegelung bei Laufbild-Filmkameras Videokameras verwendet, die lediglich Bilder mit einer bestimmten Videonorm liefern. Wenn eine andere Videonorm gewünscht wird, muß die Videokamera ausgetauscht werden.

Aufgabe der Erfindung ist es, einen Normwandler für Videobilder vorzuschlagen, mit dem die Videonorm eines Videosignals umgewandelt werden kann, sowie ein Verfahren zum Umwandeln der Norm eines Videosignals zur Verfügung zu stellen.

Erfindungsgemäß wird diese Aufgabe durch die Merkmale des Anspruchs 1 gelöst. Der Normwandler für Videobilder besitzt einen Speicher zum Speichern eines digitalen Videosignals, einen Adreß-Generator zum Generieren von Adressen des Speichers und einen Interpolator zum Interpolieren der an den generierten Adressen des Speichers abgespeicherten Daten, wobei die Interpolation in Abhängigkeit von den generierten Speicher-Adressen erfolgt. Der Normwandler dient zum Umwandeln der Video-Norm eines digitalen oder digitalisierten Videosignals. Bei dem Speicher handelt es sich vorzugsweise um einen Vollbild-Speicher, also um einen Speicher, der jeweils ein gesamtes Videobild speichern kann. Hierbei kann es sich um einen Speicher für ein Schwarz-Weiß-Bild handeln. Vorzugsweise wird allerdings ein RGB-Speicher (Rot-Grün-Blau-Speicher) verwendet, der ein Farb-Videobild speichern kann, der also die drei Teilbilder (rot-grün-blau) eines FarbVideobilds speichern kann.

Die vom Adreß-Generator generierten Adressen des Speichers entsprechen jeweils bestimmten Bildpunkten. In Abhängigkeit von den generierten Speicher-Adressen, also von den jeweiligen Bildpunkten, erfolgt dann die Interpolation der an den generierten Adressen abgespeicherten Daten.

Vorteilhafte Weiterbildungen sind in den Unteransprüchen beschrieben.

Vorteilhaft ist es, wenn der Adreß-Generator jeweils vier Adressen generiert. Diese vier Adressen entsprechen vorzugsweise vier benachbarten Bildpunkten. Diese vier benachbarten Bildpunkte werden für eine Interpolation verwendet.

Vorzugsweise bestimmt der Interpolator ein gewichtetes Mittel. Wenn die Norm eines farbigen Videobilds umgewandelt wird, wenn also ein RGB-Speicher verwendet wird, bestimmt der Interpolator das gewichtete Mittel vorzugsweise für jeden Farbanteil gesondert.

Vorteilhaft ist es, wenn die Gewichte variabel sind. Hierbei hängen die Gewichte vorzugsweise von der geometrischen Lage jedes Ausgangsbildpunktes zu den gespeicherten Nachbarpunkten ab. Auf diese Weise können besonders gute Interpolationsergebnisse erzielt werden.

Die Interpolation kann in horizontaler und/oder vertikaler Richtung durchgeführt werden. Der Interpolator kann auch eine zeitliche Interpolation durchführen.

Eine weitere vorteilhafte Weiterbildung ist dadurch gekennzeichnet, daß der Interpolator eine Interpolation zwischen den Bildformaten 4 : 3 und 16 : 9 durchführt, ggf. mit einer Kompensation anamorphotischer Abbildung.

Bei einem Verfahren zum Umwandeln der Norm (Video-Norm) eines Videosignals bzw. -bildes wird die oben angegebene Aufgabe durch die kennzeichnenden Merkmale des Anspruchs 14 gelöst. Das Videosignal bzw. digitale Videosignal wird gespeichert, wobei vorzugsweise die drei Farbkomponenten bzw. -bilder gesondert gespeichert werden. Ferner werden Adressen des Speichers generiert. Die an den generierten Adressen abgespeicherten Daten werden in Abhängigkeit von den generierten Adressen interpoliert.

Vorteilhafte Weiterbildungen dieses Verfahrens sind in den weiteren Unteransprüchen beschrieben.

Die Erfindung betrifft ferner eine Videokamera mit einem Flächensensor, insbesondere mit einem CCD-Sensor, die erfindungsgemäß durch einen erfindungsgemäßen Normwandler gekennzeichnet ist. Vorzugsweise handelt es sich um eine Videokamera für eine Laufbild-Filmkamera, also um einen sogenannten 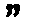 Video-Assist".

Der Flächensensor bzw. CCD-Sensor weist vorzugsweise rechteckige Bildpunkte auf. Besonders vorteilhaft ist es, wenn die Bildpunkte quadratisch sind. Ferner weist der Flächensensor bzw. CCD-Sensor vorzugsweise mindestens die Auflösung der auflösungsreichsten Videonorm auf. Hierdurch lassen sich qualitativ besonders gute Ergebnisse erzielen.

Schließlich betrifft die Erfindung eine Laufbild-Filmkamera, die erfindungsgemäß durch eine erfindungsgemäße Videokamera bzw. einen erfindungsgemäßen Video-Assist gekennzeichnet ist.

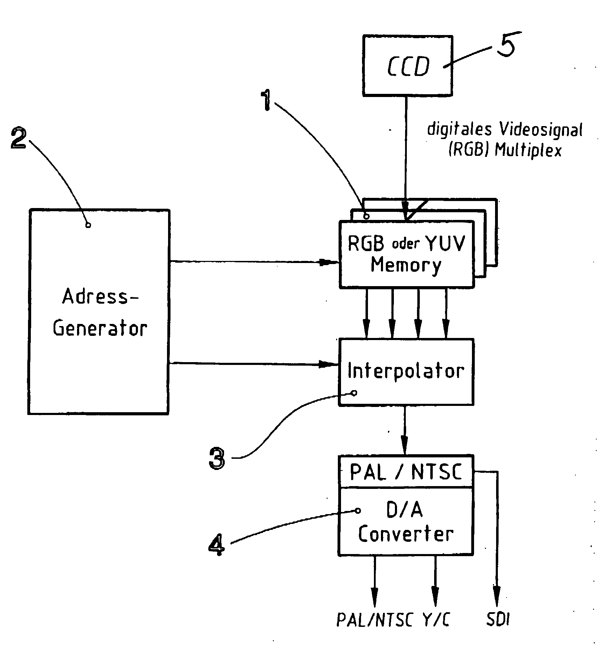

Ein Ausführungsbeispiel der Erfindung wird nachstehend anhand der beigefügten Zeichnung im einzelnen erläutert. In der Zeichnung zeigt
- die einzige Figur: einen Normwandler für Videobilder in einer schematischen Darstellung.

Der Normwandler besteht aus einem RGB-Speicher (RGB-Memory) 1, einem Adreß-Generator 2 und einem Interpolator 3. Anstelle des RGB-Speichers kann auch ein Y-U-V-Speicher (Y-U-V-Memory) verwendet werden. Die Videokamera (in der Zeichnung nicht dargestellt) besitzt einen Sensorchip, nämlich einen CCD-Chip 5, mit einer Rot-Grün-Blau-Farbmaske. Das von diesem Sensorchip (CCD-Sensor) 5 gewonnene Signal wird digitalisiert, so daß die Farbauszüge abwechselnd im Rot-Grün-Blau-Multiplex (RGB-Multiplex) erscheinen. Dieses digitalisierte Videosignal (RGB-Multiplex) wird dem RGB-Speicher 1 zugeführt Es handelt sich - je nach Sensorchip - um ein Videosignal in einer bestimmten Videonorm.

Der Adreß-Generator 2 liefert je eine Adresse zum Beschreiben und eine Adresse zum Auslesen des Bildspeichers. Der Adreß-Generator ist derart organisiert bzw. aufgebaut bzw. programmiert, daß gleichzeitig vier benachbarte Bildpunkte aus dem Speicher 1 ausgelesen werden können. Bei Bedarf können auch mehr als vier Bildpunkte ausgelesen werden. Durch die vier Pfeile vom Speicher 1 zum Interpolator 3 wird zum Ausdruck gebracht, daß gleichzeitig vier benachbarte Bildpunkte ausgelesen werden.

Aus diesen vier benachbarten Bildpunkten wird durch den Interpolator 3 ein gewichtetes Mittel für jeden Farbanteil bestimmt. Die Gewichte sind variabel. Sie hängen von der geometrischen Lage jedes Ausgangs-Bildpunktes zu den gespeicherten Nachbarpunkten ab. Durch den Interpolator kann eine sub-pixelgenaue Interpolation durchgeführt werden.

Die Signale aus dem Interpolator 3 werden einem Converter 4 zugeführt. Dort findet eine Digital-Analog-Wandlung (D/A-Wandlung) statt. Der Converter 4 gibt ein Composit Video-Signal ab, also ein PAL-Signal oder ein NTSC-Signal. Er kann ferner ein Component Video-Signal abgeben, also ein Y-Signal oder ein C-Signal.

Es ist ferner möglich, die Signale aus dem Interpolator 3 einem Parallel-Seriell-Wandler zuzuführen, der dann ein SDI-Signal (serielles digitales Videosignal) ab

gibt. Wie aus der vorstehenden Beschreibung hervorgeht wird das Video-Signal digitalisiert und in einem Vollbildspeicher 1 abgelegt. Beim Auslesen des Speichers 1 wird eine Normwandlung durchgeführt. Diese kann einem oder mehreren der folgenden Zwecke dienen:
(1) Spiegelung des Bildes in horizontaler und/oder vertikaler Richtung. Damit können Spiegelungen im optischen Strahlengang (beispielsweise einer Laufbild-Filmkamera und/oder der Video-Ausspiegelung einer Laufbild-Filmkamera) so kompensiert werden, daß wieder ein aufrechtes, seitenrichtiges Monitorbild entsteht.
(2) Umschaltung zwischen PAL (625 Zeilen) und NTSC (525 Zeilen). Die Anpassung der Zeilenzahl geschieht durch eines der folgenden drei Verfahren:
   - Weglassen oder Verdoppeln einzelner Zeilen;
   - bilineare Interpolation;
   - andere Interpolation (z.B. Spline).
   Wesentlich ist dabei, daß immer die gesamte Sensorfläche, also die gesamte Fläche des Videosensors, verwendet werden kann, ohne daß optische Verzerrungen entstehen, d.h. ohne daß optische Korrekturen notwendig werden.
(3) Umschaltung zwischen 25 und 30 Hz Bildtrequenz. Der Speicher kann mit einer anderen Geschwindigkeit ausgelesen werden als er beschrieben wird. Dabei können einzelne Bilder doppelt gelesen oder weggelassen werden. Es kann auch eine zeitliche Interpolation durchgeführt werden.
(4) Umschaltung zwischen den Bildformaten 4 : 3 und 16 : 9 mit Kompensation anamorphotischer Abbildung. Die Anpassung der Zeilenzahl geschieht dabei nach einem der unter (2) genannten Verfahren.

Der PAL/NTSC D/A Converter besteht aus einer digitalen umschaltbaren Farbraumtransformation von RGB (rot-grün-blau) nach PAL bzw. NTSC sowie der eigentlichen D/A-Wandlung. Das Luminanzsignal (Y = Helligkeit) wird mit dem Chrominanzsignal (C = Farbe) mit Hilfe eines Farbträgers gemischt (Composit Video) oder getrennt ausgegeben (Component Video).

Die Anwendung der Interpolation nicht nur in vertikaler Richtung, sondern auch in horizontaler Richtung erlaubt zusätzlich eine Variation der Bildpunktfrequenz. Damit können beispielsweise Sensoren mit quadratischen Bildpunkten zum Einsatz kommen, und es kann trotzdem mit der in der digitalen Fernsehnorm üblichen Taktfrequenz von 13,5 MHZ gefahren werden.

## Patentansprüche

1. Normwandler für Videobilder
**gekennzeichnet durch**
einen Speicher (1) zum Speichern eines digitalen Videosignals,
einen Adreßgenerator (2) zum Generieren von Adressen des Speichers (1)
und einen Interpolator (3) zum Interpolieren der an den generierten Adressen des Speichers (1) abgespeicherten Daten, wobei die Interpolation in Abhängigkeit von den generierten Speicher-Adressen erfolgt.

2. Normwandler nach Anspruch 1, dadurch gekennzeichnet, daß der Speicher (1) ein RGB-Speicher ist.

3. Normwandler nach Anspruch 1 oder 2, dadurch gekennzeichnet, daß der Adreßgenerator (2) jeweils vier Adressen generiert.

4. Normwandler nach einem der vorhergehenden Ansprüche, dadurch gekennzeichnet, daß der Interpolator (3) ein gewichtetes Mittel, gegebenenfalls für jeden Farbanteil, bestimmt.

5. Normwandler nach Anspruch 4, dadurch gekennzeichnet, daß die Gewichte variabel sind.

6. Normwandler nach Anspruch 4 oder 5, dadurch gekennzeichnet, daß die Gewichte von der geometrischen Lage jedes Ausgangsbildpunktes zu den gespeicherten Nachbarpunkten abhängen.

7. Normwandler nach einem der vorhergehenden Ansprüche, dadurch gekennzeichnet, daß die Interpolation in horizontaler und/oder vertikaler Richtung durchgeführt wird.

8. Normwandler nach einem der vorhergehenden Ansprüche, dadurch gekennzeichnet, daß der Interpolator (3) auch eine zeitliche Interpolation durchführt.

9. Normwandler nach einem der vorhergehenden Ansprüche, dadurch gekennzeichnet, daß der Interpolator (3) eine Interpolation zwischen den Bildformaten 4 : 3 und 16 : 9 durchführt, gegebenenfalls mit einer Kompensation anamorphotischer Abbildung.

10. Videokamera mit einem Flächensensor, insbesondere mit einem CCD-Sensor, insbesondere für eine Laufbild-Filmkamera,
**gekennzeichnet durch**
einen Normwandler nach einem der Ansprüche 1 bis 9.

11. Videokamera nach Anspruch 10, dadurch gekennzeichnet, daß der Flächensensor bzw. CCD-Sensor rechteckige, vorzugsweise quadratische Bildpunkte aufweist.

12. Videokamera nach Anspruch 10 oder 11, dadurch gekennzeichnet, daß der Flächensensor bzw. CCD-Sensor mindestens die Auflösung der auflösungsreichsten Videonorm aufweist.

13. Laufbild-Filmkamera, gekennzeichnet durch eine Videokamera nach einem der Ansprüche 10 bis 12.

14. Verfahren zum Umwandeln der Norm eines Videosignals,
**dadurch gekennzeichnet,**
daß das Videosignal gespeichert wird,
daß Adressen des Speichers generiert werden
und daß die an den generierten Adressen abgespeicherten Daten in Abhängigkeit von den generierten Adressen interpoliert werden.

15. Verfahren nach Anspruch 14, dadurch gekennzeichnet, daß jeweils vier Adressen generiert werden.

16. Verfahren nach Anspruch 14 oder 15, dadurch gekennzeichnet, daß durch die Interpolation ein gewichtetes Mittel, gegebenenfalls für jeden Farbanteil, bestimmt wird.

17. Verfahren nach Anspruch 16, dadurch gekennzeichnet, daß die Gewichte variabel sind.

18. Verfahren nach Anspruch 16 oder 17, dadurch gekennzeichnet, daß die Gewichte von der geometrischen Lage jedes Ausgangsbildpunktes zu den gespeicherten Nachbarpunkten abhängen.

19. Verfahren nach einem der Ansprüche 14 bis 18, dadurch gekennzeichnet, daß die Interpolation in horizontaler und/oder vertikaler Richtung durchgeführt wird.

20. Verfahren nach einem der Ansprüche 14 bis 19, dadurch gekennzeichnet, daß eine zeitliche Interpolation durchgeführt wird.

21. Verfahren nach einem der Ansprüche 14 bis 20, dadurch gekennzeichnet, daß eine Interpolation zwischen den Bildformaten 4 : 3 und 16 : 9 durchgeführt wird, gegebenenfalls mit einer Kompensation anamorphotischer Abbildung.
